# EUROPEAN PATENT SPECIFICATION

(11) **EP 0 801 861 B1**
(45) Date of publication and mention of the grant of the patent: **10.12.2003**
(21) Application number: 95942815.2
(22) Date of filing: 21.12.1995
(51) Int. Cl.: H04M 3/42

(54) **DEVICE TO ADAPT SERVICES BETWEEN FIRST AND SECOND TELE- AND/OR DATA COMMUNICATIONS SYSTEM**
VORRICHTUNG ZUR ANPASSUNG VON DIENSTEN ZWISCHEN EINEM ERSTEN UND EINEM ZWEITEN TELEKOMMUNIKATIONS- UND/ODER DATENKOMMUNIKATIONSSYSTEM
DISPOSITIF PERMETTANT D'ADAPTER DES SERVICES ENTRE UN PREMIER ET UN SECOND SYSTEME DE TELECOMMUNICATIONS ET/OU DE COMMUNICATIONS DE DONNEES

(30) Priority: 05.01.1995 SE 9500034
(43) Date of publication of application: 22.10.1997
(73) Proprietor: TELIA AB, 123 86 Farsta (SE)
(72) Inventor: NYCKELG RD, Sören, S-448 34 Floda (SE)
(74) Representative: Hopfgarten, Nils
(86) International application number: SE9501563
(87) International publication number: WO96021311

(56) References cited:
- WO-A-94/13091

## Description

### TECHNICAL FIELD

The present invention relates to a device for adaptation of one or more in a first tele- and/or data communications system established services to a second tele- and/or data communications system. Respective service is at that constructable by means of part functions in the service executing units/modules/blocks which are connectable to each other. The mentioned part functions comprise first operation specific functions, which are system specific functions and second connection specific functions.

### PRIOR ART

It is known to transfer service functions in one network to another network. It is also known to utilize SIB-units (Service Independent Buildingblock) for executing part functions of respective service and to link up a number of different part functions executing blocks to create so called scripts for achieving the service in question. It is also known to utilize interface in different connections for entries and exits to, respective from, tele- and data communications network.

WO-A-9413091 describes a method and a control system allowing devices, which are provided with different sets of sub-functions, to be complemented with new sub-functions, which are structured like modules that fit into all existing devices. This is accomplished by structuring the device into sub-functions. The control system provides for a unitary interface by which a modular sub-function can be added or removed from an existing device.

### DESCRIPTION OF THE INVENTION

### TECHNICAL PROBLEM

At utilizing SIB-units and scripts in connection to advanced telecommunications systems of for instance type AXE, problems will arise with transfer of offers of services from one system to another. To perform that, so far has been required great expert knowledge in the field of telephony of the staff arranging the services. The invention intends among other things to solve this problem by suggesting that the service specific parts of the function, that is the operation specific functions, be separated from the system specific parts, that is the connection specific functions.

There also exists a need for having the possibility to work with short lead times, and the invention also solves this problem.

There is a wish to transfer services from the first tele- and data communications system to the second communications system, without making actual interferences in the devices executing the services, the SIB-units etc. The invention also solves this problem.

### THE SOLUTION

What can in the main be regarded as characteristic for the new device is that the operation specific functions are located in/possible to be executed by means of a service executing device/function and the connection specific functions are placed in/executed by a main interface, and that the first and second tele- and data communications systems are allotted a unique main interface, that is, each communications system is allotted a certain main interface, not necessarily the same as the main interface of other communications systems. An adaption aimed at to a new tele- or data communication system of an existing offer of services is consequently performed by exchange of the main interface.

In further developments of the idea of invention a first unit/module/block is allotted call- and fault functions. The first unit commmunicates with the service executing device via the main interface. The first unit and a second unit which represents the service executing device function and the main interface constitute three from each other separated functions/units/products in the system. The main interface is in one embodiment operating with supervision and protection functions. The service executing device comprises or operates by a number of linked up part functions. The same quality can be attributed to the main interface. The new main interface shows for the new system specific qualities. The service offer is also directly transferable to the new system by the service executing device cooperating or functioning together via an internal interface which is identical to all main interfaces.

### ADVANTAGES

By the above suggested so far utilized principles for construction of service profiles can be used and yet making it possible that the service offer becomes easily transferable between the systems. The staff producing the service offer need not have expert knowledge of the advanced telecommunications technology existing in this case. The system can operate on established platforms which need not be subject to any principal changes.

### DESCRIPTIONS OF FIGURES

One at present suggested embodiment of a device which shows the for the invention significant characteristics is described below where, at the same time, references are made to the enclosed drawing where the figure in the form of a principal diagram shows by the new device concerned parts in tele- and/or data communications system of relevant kind.

### DETAILED EMBODIMENT

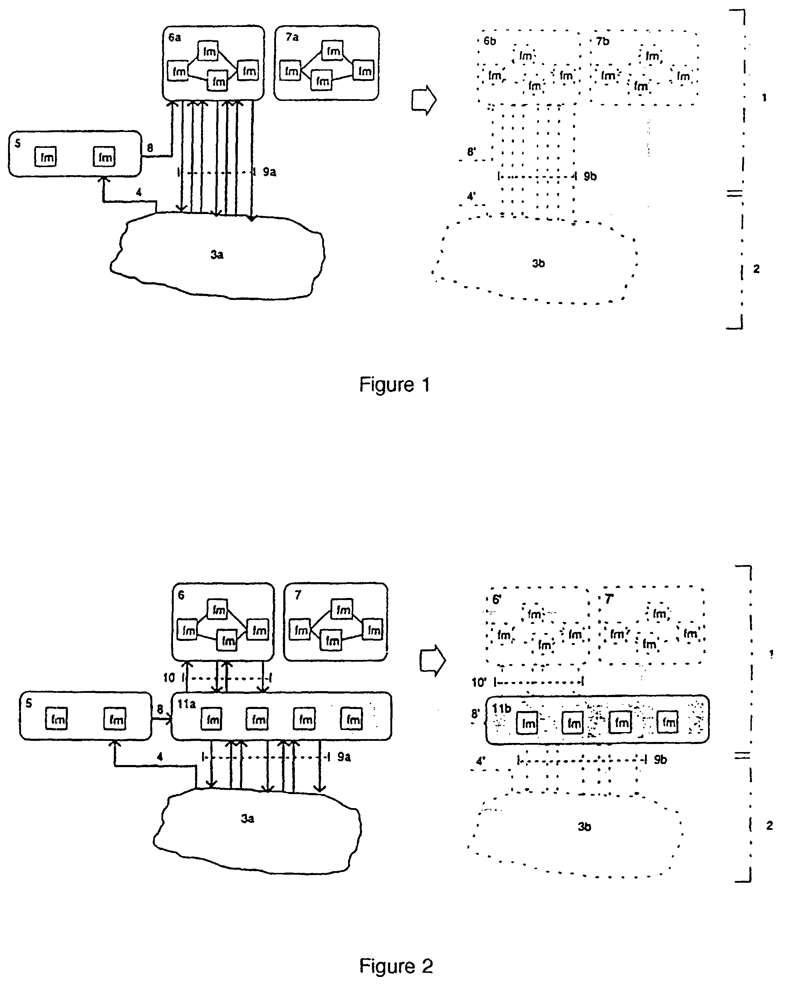

In the Figures 1 and 2 level 1 represents such AXE-functionality which, according to known definition, is attributed to a Service Control Function (SCF) in a tele - and/or data communications system. Level 2 represents such functionality which, according to known definition, is attributed one in just any technology realized Service Switching Function (SSF)

3a respective 3b represent different operative applications of SSF where variations in functionality and signalling protocol towards SCP distinguish respective application. Examples of such variations can be different qualities at different operators' tele- and/or datacommunications networks or nodes.

SSF-application 3a and 3b communicate with the access - and fault managing function 5 in SCF via identical signal relations 4 respective 4'.

The logical units in SPC have been created by linking up/cooperation between different part functions/function modules (fm).

Figur 1 shows the procedure when the in SSF installed services 6a respective 7a shall be adapted towards a new SSF. Because function connection and protocol towards. the new SSF differs, the services must be reconstructed to 6b and 7b, with demands for revalidation as a consequence.

In Figure 2 a main interface consisting of part functions/function modules has been created according to the invention by separating connection and disconnection functions and monitoring functions, that is connection specific functions, from the other logics of the service, that is the operation specific functions, and arrange these functions in a not service specific interface, 11a, a main interface. For each SSF-application a new main interface 11a+11b is introduced, characterized in that the interfaces exhibit towards respective SSP-application uniquely adapted qualities/signal relations 9a+9b, whereas they towards units within SCF, that is the service executing device and the first unit, exhibit an identical, SSF-independent signal relation, 8 respective 10.

Please observe that the signal relations 8 respective 8! are identical. This also applies to 10 and 10'.

By the device according to Figure 2 existing services 6 respective 7 can be transferred to a new SSF-application without reconstruction.

In addition the comparatively uncomplicated internal interfaces 8 and 10 within SCF make the lead times considerably shorter at the creation of new services, because the comparatively complicated and SSF-dependent signal relations 9a respective 9b need not be regarded or be known to the constructor of the services.

The in the invention utilized devices/units are designed in known technology and in a known way.

The invention is not restriced to the in the above as example shown embodiment, but can be subject to modifications within the frame of the following patent claims and idea of invention.

## Claims

1. Device to adapt one or more in a first tele- and/or data communications system established services to a second tele- and/or data communications system where respective service is constructable by means of part functions in service executing units/blocks/modules which are connectable between themselves, said part functions including first operation specific functions and second connection specific functions, **characterized in that** the first operation specific functions are placed in or executable by means of a service executing device, and the second connection specific functions are placed in or executed by means of a main interface (11a, 11b), the first and second tele- and/or data communications systems being allotted unique main interfaces (11a, 11b), and **in that** the main interface (11a, 11b) is exchangeable enabling a service adaptable or movable to the second tele- and/or data communications system.

2. Device according to claim 1, **characterized in that** a first unit/module/block (5) is allotted call- and fault functions and that the first unit communicates with the mentioned service executing device via the main interface (11a, 11b).

3. Device according to claim 2, **characterized in that** the first unit (5) and a second unit which represents the service executing device and the main interface (11a, 11b) constitute three from each other individually separated functions/units in the system.

4. Device according to claim 1, 2 or 3, **characterized in that** the main interface (11a, 11b) includes or is operational with monitoring/supervision and protection functions.

5. Device according to any of the previous claims, **characterized in that** the service executing unit includes or is operational with a number of linked up part functions.

6. Device according to any of the previous claims, **characterized in that** the main interface (11a, 11b) includes or is operational with a number of modules, such as script modules.

7. Device according to any of the previous claims, **characterized in that** an internal interface (10, 10') between the service executing device and the main interface (11a, 11b) is the same at different main interfaces (11a, 11b).

## Patentansprüche

1. Vorrichtung, um einen oder mehrere in einem ersten Fernmelde- und/oder Datenkommunikationssystem eingerichtete Dienste an ein zweites Fernmelde- und/oder Datenkommunikationssystem anzupassen, wo der entsprechende Dienst mit Hilfe von Teilfunktionen in dienstausführenden Einheiten/Blöcken/Modulen konstruierbar ist, die untereinander verbindbar sind, welche Teilfunktionen erste betriebsspezifische Funktionen und zweite verbindungsspezifische Funktionen einschließen, **dadurch gekennzeichnet, daß** die ersten betriebsspezifischen Funktionen in einer Dienstausführungseinrichtung angeordnet oder durch dieselbe ausführbar sind, und daß die zweiten verbindungsspezifischen Funktionen in einer Hauptschnittstelle (11a, 11b) angeordnet oder mit Hilfe derselben ausgeführt werden, wobei den ersten und zweiten Fernmelde- und/oder Datenkommunikationssystemen eindeutige oder einzigartige Hauptschnittstellen (11a, 11b) zugeteilt sind, und daß die Hauptschnittstelle (11a, 11b) austauschbar ist, was es ermöglicht, daß ein Dienst dem zweiten Fernmelde- und/oder Datenkommunikationssystem anpaßbar oder zu demselben bewegbar ist.

2. Vorrichtung nach Anspruch 1, **dadurch gekennzeichnet, daß** einer ersten Einheit/Modul/Block (5) Ruf- und Fehlerfunktionen zugeordnet sind, und daß die erste Einheit mit der erwähnten dienstausführenden Einrichtung über die Hauptschnittstelle (11a, 11b) kommuniziert.

3. Vorrichtung nach Anspruch 2, **dadurch gekennzeichnet, daß** die erste Einheit (5) und eine zweite Einheit, die die dienstausführende Einrichtung darstellt, und die Hauptschnittstelle (11a, 11b) drei voneinander individuell getrennte Funktionen/Einheiten im System bilden.

4. Vorrichtung nach Anspruch 1, 2 oder 3, **dadurch gekennzeichnet, daß** die Hauptschnittstelle (11a, 11b) Überwachungs-/Aufsichts- und Schutzfunktionen einschließt oder mit diesen Funktionen betreibbar ist.

5. Vorrichtung nach einem der vorangehenden Ansprüche, **dadurch gekennzeichnet, daß** die dienstausführende Einheit eine Anzahl von herangeführten Teilfunktionen einschließt oder mit denselben betreibbar ist.

6. Vorrichtung nach einem der vorangehenden Ansprüche, **dadurch gekennzeichnet, daß** die Hauptschnittstelle (11a, 11b) eine Anzahl von Modulen, wie z. B. Skriptmodulen einschließt oder mit denselben betreibbar ist.

7. Vorrichtung nach einem der vorangehenden Ansprüche, **dadurch gekennzeichnet, daß** eine interne Schnittstelle (10, 10') zwischen der dienstausführenden Einrichtung und der Hauptschnittstelle (11a, 11b) dieselbe bei unterschiedlichen Hauptschnittstellen (11a, 11b) ist.

## Revendications

1. Dispositif pour adapter un ou plusieurs services établis dans un premier système de télécommunications et/ou de communications de données à un deuxième système de télécommunications et/ou de communications de données, dans lequel un service respectif peut être construit au moyen de fonctions partielles dans des unités / blocs / modules d'exécution de service qui sont connectables entre eux-mêmes, les dites fonctions partielles incluant des premières fonctions spécifiques d'une opération et des deuxièmes fonctions spécifiques d'une connexion, **caractérisé en ce que** les premières fonctions spécifiques d'une opération sont placées dans un dispositif d'exécution de service ou exécutables au moyen de celui-ci, et les deuxièmes fonctions spécifiques d'une connexion sont placées dans une interface principale (11a, 11b) ou exécutées au moyen de celle-ci, des interfaces principales particulières (11a, 11b) étant affectées aux premier et deuxième systèmes de télécommunications et/ou de communications de données, et **en ce que** l'interface principale (11a, 11b) est échangeable pour permettre un service adaptable ou déplaçable au deuxième système de télécommunications et/ou de communications de données.

2. Dispositif selon la revendication 1, **caractérisé en ce que** des fonctions d'appel et de défaut sont affectées à une première unité / un module / un bloc (5) et **en ce que** la première unité communique avec le dispositif cité d'exécution de service via l'interface principale (11a, 11b).

3. Dispositif selon la revendication 2, **caractérisé en ce que** la première unité (5) et une deuxième unité qui représente le dispositif d'exécution de service et l'interface principale (11a, 11b) constituent trois fonctions / unités individuellement séparées les unes des autres dans le système.

4. Dispositif selon la revendication 1, 2 ou 3, **caractérisé en ce que** l'interface principale (11a, 11b) comprend ou est opérationnelle avec des fonctions de surveillance / supervision et de protection.

5. Dispositif selon une quelconque des revendications précédentes, **caractérisé en ce que** l'unité d'exécution de service comprend ou est opérationnelle avec une pluralité de fonctions partielles reliées.

6. Dispositif selon une quelconque des revendications précédentes, **caractérisé en ce que** l'interface principale (11a, 11b) comprend ou est opérationnelle avec une pluralité de modules, tels que des modules de script.

7. Dispositif selon une quelconque des revendications précédentes, **caractérisé en ce qu'**une interface interne (10, 10') entre le dispositif d'exécution de service et l'interface principale (11a, 11b) est la même à différentes interfaces principales (11a, 11b).
